(19) Europäisches Patentamt
European Patent Office
Office européen des brevets

(11) **EP 4 727 005 A1**

(12) **EUROPEAN PATENT APPLICATION**
published in accordance with Art. 153(4) EPC

(43) Date of publication:
**15.04.2026 Bulletin 2026/16**

(21) Application number: **24819084.5**

(22) Date of filing: **10.05.2024**

(51) International Patent Classification (IPC):
*H02P 27/06* (2006.01)    *B60L 3/00* (2019.01)
*B60L 50/60* (2019.01)    *B60L 58/18* (2019.01)
*B60L 58/25* (2019.01)    *H02J 7/00* (2026.01)
*H02M 7/48* (2007.01)

(52) Cooperative Patent Classification (CPC):
**B60L 3/00; B60L 50/60; B60L 58/18; B60L 58/25;
H02J 7/00; H02M 7/48; H02P 27/06**

(86) International application number:
**PCT/JP2024/017410**

(87) International publication number:
**WO 2024/252847 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.06.2023 JP 2023094073**

(71) Applicant: **DENSO CORPORATION
Kariya-city, Aichi 448-8661 (JP)**

(72) Inventors:
• **SASAMA, Yuta
  Kariya-city, Aichi 448-8661 (JP)**
• **KAZAOKA, Ryoya
  Kariya-city, Aichi 448-8661 (JP)**
• **KURACHI, Taisuke
  Kariya-city, Aichi 448-8661 (JP)**

(74) Representative: **TBK
Bavariaring 4-6
80336 München (DE)**

(54) **POWER CONVERSION DEVICE AND PROGRAM**

(57) A power conversion device includes: a high-potential-side path (22H) electrically connecting a first power storage (31) and an upper arm switch (SWH); a low-potential-side path (22L) electrically connecting a second power storage (32) and a lower arm switch (SWL); a power-storage-to-power-storage switch (50); a bypass switch (60, 61); a connection path (73); a neutral point capacitor (74, 75); a current sensor (84, 83) detecting a current flowing through the connection path or a current flowing through an armature winding (11); and a controller (100). The controller performs a temperature rise control in which to cause a ripple current to flow through the first and second power storages, at least one of the upper and lower arm switches is switched in a state where the bypass switch is on and the power-storage-to-power-storage switch is off, and determines whether an abnormality in the temperature rise control occurs based on a detection value of the current sensor during the temperature rise control.

FIG.1

EP 4 727 005 A1

## Description

[Cross-Reference to Related Application]

This application is based on Japanese Patent Application No. 2023-094073 filed June 7, 2023, the description of which is incorporated herein by reference.

[Technical Field]

The present disclosure relates to a power conversion device and a program.

[Background Art]

A system including a motor, an inverter, a battery, and a controller has been known. The controller performs a temperature rise control in which the inverter is switched in order to cause a ripple current to flow through the battery. It should be noted that examples of the temperature rise control include a technology described in PTL 1.

[Citation List]

[Patent Literature]

[PTL 1] JP 2011-18532 A

[Summary of the Invention]

There is a demand for a technology enabling an accurate determination of an abnormality in a temperature rise control.
A main object of the present disclosure is to provide a power conversion device and a program enabling an appropriate determination of an abnormality in a temperature rise control.
According to the present disclosure, a power conversion device includes:

> an inverter including an upper arm switch and a lower arm switch;
> a motor including an armature winding electrically connected to a low-potential-side terminal of the upper arm switch and a high-potential-side terminal of the lower arm switch;
> a high-potential-side path that electrically connects a positive terminal of a first power storage and a high-potential-side terminal of the upper arm switch;
> a low-potential-side path that electrically connects a negative terminal of a second power storage and a low-potential-side terminal of the lower arm switch;
> a power-storage-to-power-storage switch that electrically connects a negative terminal of the first power storage and a positive terminal of the second power storage when turned on and electrically disconnects the negative terminal of the first power storage and the positive terminal of the second power storage when turned off;
> a bypass switch that establishes either one of an electrical connection between the negative terminals of the first power storage and the second power storage and an electrical connection between the positive terminals of the first power storage and the second power storage;
> a connection path that electrically connects the negative terminal of the first power storage or the positive terminal of the second power storage and the armature winding;
> a neutral point capacitor connected to the connection path;
> a current sensor that detects a current flowing through the connection path or a current flowing through the armature winding; and
> a controller to which a detection value of the current sensor is to be inputted, the controller being configured to:

>> perform a temperature rise control in which in order to cause a ripple current to flow through the first power storage and the second power storage, at least one of the upper and lower arm switches is switched in a state where the bypass switch is turned on and the power-storage-to-power-storage switch is turned off; and
>> determine whether an abnormality in the temperature rise control occurs based on the detection value of the current sensor while the temperature rise control is performed.

The power conversion device of the present disclosure includes, as components for performing the temperature rise control, the power-storage-to-power-storage switch, the bypass switch, the connection path, and the neutral point capacitor. The temperature rise control is a control in which in order to cause a ripple current to flow through the first power storage and the second power storage, at least one of the upper and lower arm switches is switched in a state where the bypass switch is turned on and the power-storage-to-power-storage switch is turned off.
While the temperature rise control is performed, a detection value of the current sensor, which detects the current flowing through the connection path or the current flowing through the armature winding, is inputted to the controller. The detection value of the current sensor in a case where an abnormality in the temperature rise control occurs exhibits a different behavior from the detection value of the current sensor in a case where no abnormality in the temperature rise control occurs. The controller is thus allowed to appropriately determine that an abnormality in the temperature rise control occurs based on the detection value of the current sensor.

[Brief Description of the Drawings]

The above and other objects, features, and advantages of the present disclosure will become more apparent from the following detailed description made with reference to the accompanying drawings. The drawings are:

Fig. 1 is an overall configuration diagram of a system according to a first embodiment;

Fig. 2 is a diagram illustrating a control state of a switch during a temperature rise control;

Fig. 3 is a diagram illustrating an equivalent circuit during the temperature rise control;

Fig. 4 is a flowchart illustrating a sequence of a temperature rise control process;

Fig. 5 is a functional block diagram of a calculation process for a battery current;

Fig. 6 is a diagram illustrating an example of an approach to threshold setting;

Fig. 7 is a diagram illustrating an example of an approach to threshold setting;

Fig. 8 is a flowchart illustrating a sequence of a temperature rise control process according to a second embodiment;

Fig. 9 is a flowchart illustrating a sequence of a temperature rise control process according to a third embodiment;

Fig. 10 is a time chart illustrating an example of voltage transition;

Fig. 11 is an overall configuration diagram of a system according to a fourth embodiment;

Fig. 12 is a diagram illustrating a control state of a switch during a temperature rise control;

Fig. 13 is a diagram illustrating an equivalent circuit during the temperature rise control;

Fig. 14 is a flowchart illustrating a sequence of a temperature rise control process;

Fig. 15 is an overall configuration diagram of a system according to another embodiment; and

Fig. 16 is an overall configuration diagram of a system according to another embodiment.

[Description of Embodiments]

Description will be given of a plurality of embodiments with reference to the drawings. In the plurality of embodiments, functionally and/or structurally corresponding units and/or associated units may be designated by the same reference sign or reference signs that differ by multiples of one hundred. For corresponding units and/or associated units, reference may be made to the description of other embodiments.

<First Embodiment>

Description will be given below of a first embodiment exemplifying a power conversion device according to the present disclosure with reference to the drawings. The power conversion device of the present embodiment is installed to a vehicle such as an electric vehicle or a hybrid vehicle to form a vehicle-mounted system.

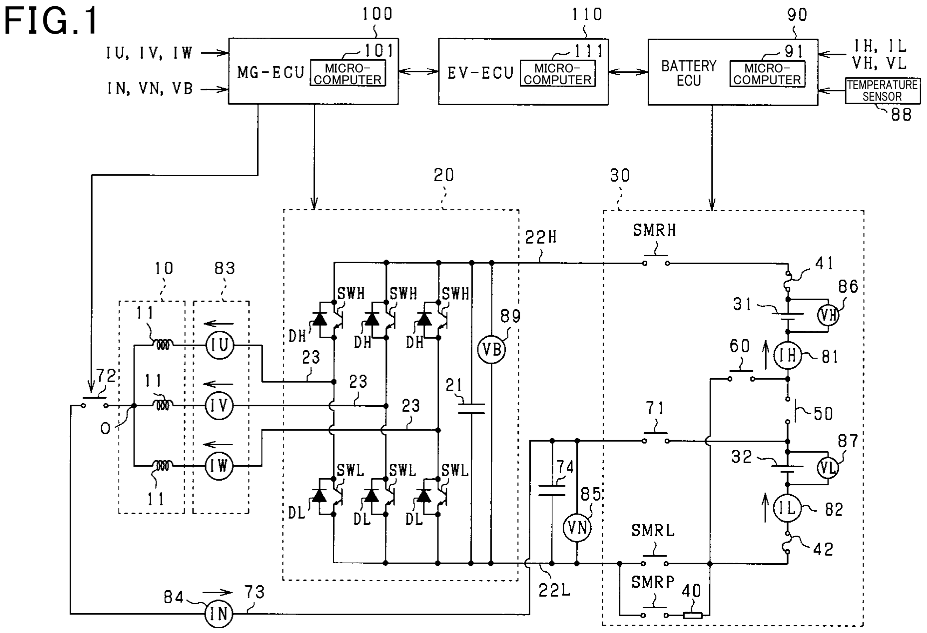

As illustrated in Fig. 1, the power conversion device includes a motor 10, an inverter 20, a high-potential-side path 22H, and a low-potential-side path 22L. The motor 10, which is a three-phase synchronous machine, includes star-connected U-, V-, and W-phase armature windings 11 and a non-illustrated rotor. The armature windings 11 of the respective phases are arranged with an electrical angle offset of 120 degrees between them. The motor 10 is, for example, a permanent magnet synchronous machine. The rotor is able to transmit power to a drive wheel of the vehicle. The motor 10 thus serves as a source of torque to cause the vehicle to travel.

The inverter 20 includes a series connection body of an upper arm switch SWH and a lower arm switch SWL for each of the three phases. The upper arm switch SWH is connected in inverse-parallel to an upper arm diode DH, which is a free wheel diode, and the lower arm switch SWL is connected in inverse-parallel to a lower arm diode DL, which is a free wheel diode. In the present embodiment, each of the switches SWH and SWL is an IGBT.

The inverter 20 includes a smoothing capacitor 21. A high-potential-side terminal of the smoothing capacitor 21 is connected to the high-potential-side path 22H. A low-potential-side terminal of the smoothing capacitor 21 is connected to the low-potential-side path 22L. The high-potential-side path 22H and the low-potential-side path 22L are, for example, electrical paths such as bus-bars. It should be noted that the smoothing capacitor 21 may be provided outside the inverter 20.

For each phase, a connection point between an emitter, which is a low-potential-side terminal of the upper arm switch SWH, and a collector, which is a high-potential-side terminal of the lower arm switch SWL, is connected to a first end of the armature winding 11 via an electrically conductive member 23 such as a bus-bar. Second ends of the armature windings 11 of the respective phases are connected to each other at a neutral point O. It should be noted that the numbers of turns of the armature windings 11 of the respective phases are set equal in the present embodiment. Thus, for instance, the inductances of the armature windings 11 of the respective phases are set equal.

The collector of the upper arm switch SWH of each phase is connected to the high-potential-side path 22H. The emitter of the lower arm switch SWL of each phase is connected to the low-potential-side path 22L.

The system includes a first battery 31 (corresponding to a "first power storage") and a second battery 32 (corresponding to a "second power storage"). Each of the batteries 31, 32 serves as a power supply source for rotating the rotor of the motor 10. Each of the batteries 31, 32 is an assembled battery including a series connection body of a plurality of unit batteries. A unit battery is a single battery cell, which is a single battery, or a series connection body of a plurality of battery cells. A positive terminal of the first battery 31 is connected to the high-potential-side path 22H via a first fuse 41 and a negative terminal of the second battery 32 is connected to the low-potential-side path 22L via a second fuse 42. The terminal voltages (for example, rated voltages) of the battery cells forming the assembled battery are, for example, set equal to each other. The battery cells are, for example, secondary batteries such as lithium-ion batteries. The rated voltage of the first battery 31 is higher than the rated voltage of the second battery 32. For example, in a case where the rated voltage of each of the unit batteries forming the first battery 31 is the same as that of each of the unit batteries forming the second battery 32, the above setting of the rated voltages may be achieved by increasing the number of the unit batteries forming the first battery 31 to be greater than the number of the unit batteries forming the second battery 32. Moreover, for example, in a case where the number of the unit batteries forming the first battery 31 is the same as that of the unit batteries forming the second battery 32, the above setting of the rated voltage may be achieved by increasing the rated voltage of the unit batteries forming the first battery 31 to be higher than that of the unit batteries forming the second battery 32.

The power conversion device includes a main switch for establishing electrical connection or disconnection between the first and second storage batteries 31, 32 and the inverter 20. In detail, a high-potential-side main switch SMRH, a low-potential-side main switch SMRL, and a precharge main switch SMRP are provided as the main switches. In the present embodiment, each of the main switches SMRH, SMRL, SMRP is a mechanical relay. Each of the main switches SMRH, SMRL, SMRP blocks circulation of a bidirectional current when turned off and permits circulation of the bidirectional current when turned on. The high-potential-side main switch SMRH connects the high-potential-side path 22H and the first fuse 41 and the low-potential-side main switch SMRL connects the low-potential-side path 22L and the second fuse 42. It should be noted that each of the main switches SMRH, SMRL is not limited to a mechanical relay and may be, for example, a semiconductor switching device. The low-potential-side main switch SMRL is connected in parallel to a series connection body of the precharge main switch SMRP and a precharge resistor 40. It should be noted that the series connection body of the precharge main switch SMRP and the precharge resistor 40 may be connected in parallel to the high-potential-side main switch SMRH in place of the low-potential-side main switch SMRL.

It should be noted that the batteries 31, 32 are chargeable by a later-described external charger installed outside the vehicle. The external charger is, for example, a stationary charger. The high-potential-side path 22H is provided with a positive-electrode-side connection where a positive terminal of the external charger is connectable. The low-potential-side path 22L is provided with a negative-electrode-side connection where a negative terminal of the external charger is connectable.

The power conversion device includes, as a component to switch the connection states of the first battery 31 and the second battery 32, a battery-to-battery switch 50 (corresponding to the "power-storage-to-power-storage switch"), a bypass switch 60, a first-motor-side switch 71, a second-motor-side switch 72, and a connection path 73. In the present embodiment, the battery-to-battery switch 50, the bypass switch 60, and each of the motor-side switches 71, 72 are mechanical relays. The battery-to-battery switch 50, the bypass switch 60, and each of the motor-side switches 71, 72 block circulation of a bidirectional current when turned off and permits circulation of the bidirectional current when turned on. It should be noted that the battery-to-battery switch 50, the bypass switch 60, and each of the motor-side switches 71, 72 are not limited to mechanical relays and may be, for example, semiconductor switching devices.

The battery-to-battery switch 50 connects a negative terminal of the first battery 31 and a positive terminal of the second battery 32. The negative terminal of the first battery 31 and the positive terminal of the second battery 32 are electrically connected by turning on the battery-to-battery switch 50. In contrast, the negative terminal of the first battery 31 and the positive terminal of the second battery 32 are electrically disconnected by turning off the battery-to-battery switch 50.

The bypass switch 60 connects the negative terminal of the first battery 31 and the low-potential-side path 22L. The negative terminal of the first battery 31 and the negative terminal of the second battery 32 are electrically connected by turning on the bypass switch 60. In contrast, the negative terminal of the first battery 31 and the negative terminal of the second battery 32 are electrically disconnected by turning off the bypass switch 60.

It should be noted that the first battery 31 and the second battery 32 form a battery unit 30 in the present embodiment.

The connection path 73 is an electrical path connecting the positive terminal of the second battery 32 and the neutral point O. In the connection path 73, the first-motor-side switch 71 and the second-motor-side switch 72 are provided in sequence from the second battery 32.

The power conversion device includes a neutral point capacitor 74, which is a capacitor connecting the connection path 73 and the low-potential-side path 22L. A first end of the neutral point capacitor 74 is connected to, within the connection path 73, a portion between the first-motor-side switch 71 and the second-motor-side switch 72. A second end of the neutral point capacitor 74 is connected to, within the low-potential-side path 22L, a portion near the inverter 20 with respect to the low-potential-side main switch SMRL and the precharge main switch SMRP.

The first end of the neutral point capacitor 74 and the positive terminal of the second battery 32 are electrically connected by turning on the first-motor-side switch 71. In contrast, the first end of the neutral point capacitor 74 and the positive terminal of the second battery 32 are electrically disconnected by turning off the first-motor-side switch 71. The neutral point O of the armature windings 11 and the first terminal of the neutral point capacitor 74 are electrically connected by turning on the second-motor-side switch 72. In contrast, the neutral point O and the first end of the neutral point capacitor 74 are electrically disconnected by turning off the second-motor-side switch 72.

The power conversion device includes, as current sensors that detect currents flowing through sections of the device, a first current sensor 81, a second current sensor 82, a phase current sensor 83, and a motor current sensor 84. The first current sensor 81 detects the current flowing through the first battery 31 and the second current sensor 82 detects the current flowing through the second battery 32. The phase current sensor 83 detects the currents flowing through the armature windings 11 of the respective phases. The motor current sensor 84 detects the current flowing through, within the connection path 73, a portion near the neutral point O with respect to a connection point with the neutral point capacitor 74.

The power conversion device includes a first voltage sensor 86 that detects a terminal-to-terminal voltage of the first battery 31, a second voltage sensor 87 that detects a terminal-to-terminal voltage of the second battery 32, a capacitor voltage sensor 85 that detects a terminal-to-terminal voltage of the neutral point capacitor 74, and a power supply voltage sensor 89 that detects a terminal-to-terminal voltage of the smoothing capacitor 21. The power conversion device includes a temperatures sensor 88 that detects the temperatures of the first battery 31 and the second battery 32. It should be noted that the power conversion device includes, as another sensor, a non-illustrated rotation angle sensor that detects a rotation angle (an electrical angle) of the rotor.

The system includes a battery ECU 90, a control target of which is the battery unit 30; a motor ECU 100, a control target of which is the inverter 20; and an EV ECU 110 that performs a collective control of the system. The battery ECU 90 is an electronic control unit consisting mainly of a microcomputer 91. The motor ECU 100 is an electronic control unit consisting mainly of a microcomputer 101. The EV ECU 110 is an electronic control unit consisting mainly of a microcomputer 111 and is a controller higher in level than the battery ECU 90 and the motor ECU 100. The transmission and reception of the information between the battery ECU 90 and the motor ECU 100 are enabled via the EV ECU 110.

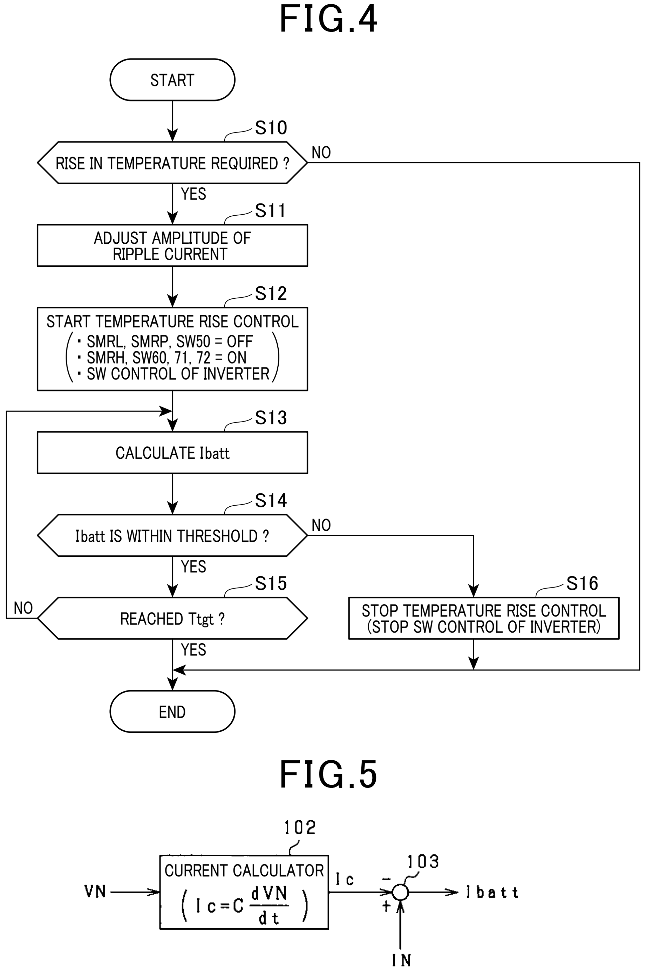

Each of the microcomputers 91, 101, 111 includes a CPU (Central Processing Unit). A function provided by each of the microcomputers 91, 101, 111 may be provided by software recorded in a tangible memory device and a computer executing the software, software only, hardware only, or a combination thereof. For example, in a case where each of the microcomputers 91, 101, 111 is an electronic circuit, which is hardware, it may be provided by a digital circuit including a large number of logic circuits or an analog circuit. For example, each of the microcomputers 91, 101, 111 executes a program stored in a non-transitory tangible storage medium, which is an own storage of the microcomputer. The program includes, for example, a program for a later-described process illustrated in Fig. 5 or the like. A method corresponding to the program is to be performed by execution of a set of instructions forming the program. The storage is, for example, a non-volatile memory. It should be noted that the program stored in the memory may be updated via, for example, OTA (Over The Air) or the like or a communication network such as the Internet.

Detection values of the first current sensor 81, the second current sensor 82, the first voltage sensor 86, the second voltage sensor 87, and the temperature sensor 88 are to be inputted to the battery ECU 90. In the present embodiment, the detection values of the first current sensor 81, the second current sensor 82, the first voltage sensor 86, the second voltage sensor 87, and the temperature sensor 88 are to be inputted to neither the motor ECU 100 nor the EV ECU 110.

Detection values of the phase current sensor 83, the motor current sensor 84, the capacitor voltage sensor 85, the power supply voltage sensor 89, and the rotation angle sensor are to be inputted to the motor ECU 100.

The motor ECU 100 performs a switching control for each of the switches SWH, SWL forming the inverter 20 so as to perform a feedback control based on the detection value of each of the sensors in order to feed back a control quantity of the motor 10 into a command value. The control quantity is, for example, torque. For each phase, the upper arm switch SWH and the lower arm switch SWL are to be alternately turned on. A rotative power of the rotor of the motor 10 is to be transmitted to the drive wheel through the feedback control, causing the vehicle to travel.

It should be noted that each of the main switches SMRH, SMRL, SMRP, the battery-to-battery switch 50, the bypass switch 60, and each of the motor-side switches 71, 72 may be controlled by any one of the battery ECU 90, the motor ECU 100, and the EV ECU 110 or may be controlled by an ECU other than the ECUs 90, 100, 110. In the present embodiment, it is assumed hereinbelow that each of the main switches SMRH, SMRL, SMRP, the battery-to-battery switch 50, the bypass switch 60, and each of the motor-side switches 71, 72 are to be controlled by the motor ECU 100.

Subsequently, description will be given of a temperature rise control for a battery, which is to be performed by the motor ECU 100. The temperatures of the first battery 31 and the second battery 32 are promptly raised through the temperature rise control in order to reduce, for example, a charging time with an external charger.

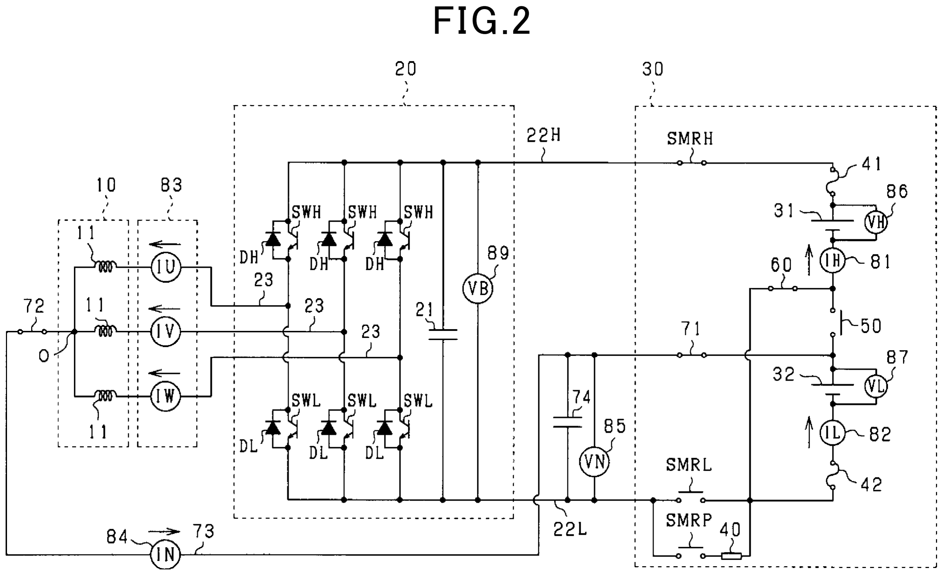

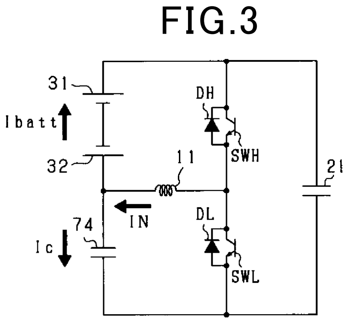

Fig. 2 illustrates a control state of each switch during the temperature rise control. For the temperature rise control, the motor ECU 100 turns on the high-potential-side main switch SMRH, the bypass switch 60, and each of the motor-side switches 71, 72 and turns off the low-potential-side main switch SMRL, the precharge main switch SMRP, and the battery-to-battery switch 50. Fig. 3 is an equivalent circuit in the power conversion device during the temperature rise control. In the equivalent circuit, the upper arm switch SWH and the lower arm switch SWL form a half-bridge circuit.

Fig. 4 is a flowchart illustrating a process sequence of the temperature rise control. The process is to be performed by the motor ECU 100.

In Step S10, it is determined whether a rise in temperature of at least one of the first battery 31 and the second battery 32 is required. For example, in response to a battery detection temperature TBr being determined to be less than a target temperature TBtgt, it is determined that a rise in temperature is required, whereas in response to the battery detection temperature TBr being determined to be equal to or more than the target temperature TBtgt, it is determined that no rise in temperature is required. Here, the battery detection temperature TBr may be, for example, the lower one of temperatures TB1, TB2 of the first and second storage batteries 31, 32 detected by the temperature sensor 88 or may be an average temperature of the first and second storage batteries 31, 32. The temperatures TB1, TB2 of the first and second storage batteries 31, 32 are to be acquired from the battery ECU 90 via the EV ECU 110.

In response to a rise in temperature being determined to be required in Step S10, the process proceeds to Step S11 to adjust a magnitude of an amplitude of a target current Itgt flowing through the first battery 31 and the second battery 32. The target current Itgt is an alternating current signal variable with a predetermined period. For example, after a calculation of a difference between the battery detection temperature TBr and the target temperature TBtgt, the amplitude may be increased with an increase in the calculated difference. The target current Itgt of the present embodiment is a sine wave current. A time average value of the target current Itgt per one period is, for example, zero.

In Step S12, the temperature rise control is started. In detail, the low-potential-side main switch SMRL, the precharge main switch SMRP, and the battery-to-battery switch 50 are turned off and the high-potential-side main switch SMRH, the bypass switch 60, the first-motor-side switch 71, and the second-motor-side switch 72 are turned on.

Moreover, in Step S12, the current flowing through the first battery 31 and the second battery 32 is controlled to reach the target current Itgt by switching the inverter 20. For example, a current detected by the first current sensor 81 or the second current sensor 82 is acquired from the battery ECU 90 and the switching is performed so that the acquired current is controlled to reach the target current Itgt.

In Step S12, the upper and lower arm switches SWH, SWL of the inverter 20 may be alternately switched on, or the upper arm switch SWH may be switched while the lower arm switch SWL is kept in the OFF position. In this case, the switching may be performed for all of the three phases, only two of the three phases, or only one of the three phases. In a case where the switching is performed for two or more of the phases, for example, not only the timings of switching the upper arm switches SWH on but also the timings of switching them off may be synchronized between the phases.

In Step S13, a battery current Ibatt, which is the current flowing through the first battery 31 and the second battery 32, is calculated. Fig. 5 is a block diagram of a calculation process for the battery current Ibatt.

A first current calculator 102 calculates a capacitor current Ic, which is a current flowing through the neutral point capacitor 74, based on a time derivative of a capacitor voltage VN, which is a voltage detected by the capacitor voltage sensor 85, and a capacitance C of the neutral point capacitor 74. The above calculation method is based on the following expression (eq1).
[Math. 1]

$$I_C = c \frac{dVN}{dt} \quad (eq1)$$

A second current calculator 103 calculates the battery current Ibatt by subtracting the capacitor current Ic calculated by the first current calculator 102 from a motor current IN, which is a current detected by the motor current sensor 84. It should be noted that in the second current calculator 103, a current flowing through the connection path 73 (specifically, within the connection path 73, a portion near the neutral point O with respect to the connection point with the neutral point capacitor 74) calculated based on the detection value of the phase current sensor 83 may be used in place of the motor current IN.

In Step S14, it is determined whether an abnormality in the temperature rise control occurs based on the calculated battery current Ibatt. Here, an abnormality in the temperature rise control refers to, for example, an abnormality where the magnitude of the current flowing through the first and second batteries 31, 32 deviates from a magnitude (|Itgt|) of the target current Itgt by more than a predetermined value. The occurrence of an abnormality in the temperature rise control may cause overcurrent to flow through a closed circuit including the inverter 20, the armature windings 11, the connection path 73, the first and second storage batteries 31, 32, and the like, resulting in a decrease in reliability of the inverter 20, the first and second storage batteries 31, 32, and the like.

Specifically, an abnormality in the temperature rise control occurs due to, for example, the following factors (A) to (C).

(A) An abnormality in a path where the current flows during the temperature rise control

The path where the current flows includes the first fuse 41, the high-potential-side main switch SMRH, the high-potential-side path 22H, the inverter 20, the electrically conductive member 23, the armature windings 11, the second-motor-side switch 72, the connection path 73, the first-motor-side switch 71, the second fuse 42, and the bypass switch 60. For example, an abnormality in, within the path where the current flows, the inverter 20 includes unintentionally turning on the upper arm switch SWH. The occurrence of the unintentional turning on may cause overcurrent to flow through the connection path 73, the first and second storage batteries 31, 32, and the like during the temperature rise control, resulting in a decrease in reliability of the first and second storage batteries 31, 32, and the like. The unintentional turning on may occur due to, for example, a short circuit fault of the upper arm switch SWH.

(B) An abnormality in the motor ECU 100

An abnormality in the motor ECU 100 may lead to an abnormality in the temperature rise control. For example, the upper arm switch SWH may be kept in the ON position due to an abnormality in the motor ECU 100 even though switching the upper arm switch SWH is desired. In other words, the upper arm switch SWH may be unintentionally turned on.

(C) An abnormality in a signal path from the motor ECU 100 to a gate of the upper arm switch SWH

An abnormality in a signal path may lead to an abnormality in the temperature rise control. The abnormality in the signal path includes, for example, an abnormality in a drive IC of the upper arm switch SWH. In this case, the upper arm switch SWH may be unintentionally turned on.

The following two examples will be described as specific examples of the process in Step S14.

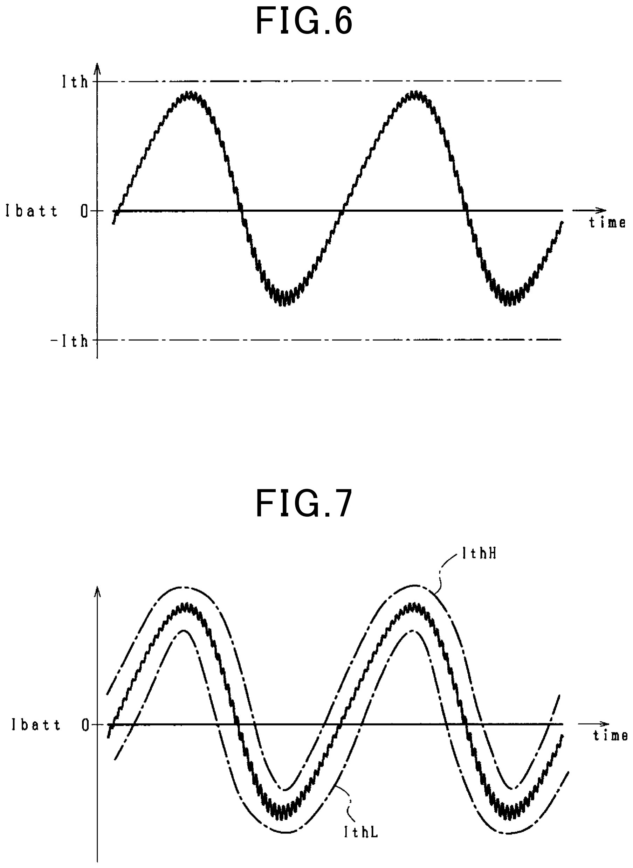

With use of Fig. 6, the first example will be described.

An upper threshold Ith, which is larger than a positive maximum value of the target current Itgt, and a lower threshold -Ith, which is smaller than a negative maximum value of the target current Itgt, are set. In response to the battery current Ibatt being determined to exceed the upper threshold Ith or the battery current Ibatt being determined to fall below the lower threshold -Ith, it is determined that an abnormality in the temperature rise control occurs. In contrast, in response to the battery current Ibatt being determined to be equal to or less than the upper threshold Ith and equal to or more than the lower threshold -Ith, it is determined that no abnormality in the temperature rise control occurs.

With use of Fig. 7, description will be made on the second example.

An upper threshold IthH, which is larger than the target current Itgt and changes along the target current Itgt, and a lower threshold IthL, which is smaller than the target current Itgt and changes along the target current Itgt, are set. In detail, the upper threshold IthH is set by adding a first predetermined value to the target current Itgt and the lower threshold IthL is set by subtracting a second predetermined value from the target current Itgt. The first predetermined value and the second predetermined value may be the same value or different values.

In response to the battery current Ibatt being determined to exceed the upper threshold IthH or the battery current Ibatt being determined to fall below the lower threshold IthL, it is determined that an abnormality in the temperature rise control occurs. In contrast, in response to the battery current Ibatt being determined to be equal to or less than the upper threshold IthH and equal to or more than the lower threshold IthL, it is determined that no abnormality in the temperature rise control occurs.

The battery current Ibatt in a case where an abnormality in the temperature rise control occurs exhibits a different behavior from the battery current Ibatt in a case where no abnormality in the temperature rise control occurs. It is thus possible to appropriately determine that an abnormality in the temperature rise control occurs through the process in Step S14.

Referring back to the description on Fig. 4, in response to a positive determination in Step S14, it is determined that no abnormality in the temperature rise control occurs and the process proceeds to Step S15. In Step S15, it is determined whether the battery detection temperature TBr has reached the target temperature TBtgt. In response to the battery detection temperature TBr being determined to be less than the target temperature TBtgt, the process proceeds to Step S13. In contrast, in response to the battery detection temperature TBr being determined to have reached the target temperature TBtgt, the switching control for the inverter 20 is stopped and the temperature rise control is terminated.

In contrast, in response to a negative determination in Step S14, it is determined that an abnormality in the temperature rise control occurs and the process proceeds to Step S16. In Step S16, the switching control for the inverter 20 is stopped and the temperature rise control is stopped.

In the present embodiment described hereinabove, the motor ECU 100, which performs the temperature rise control, determines the presence or absence of an abnormality based on the detection values of the motor current sensor 84 and the capacitor voltage sensor 85. Thus, the motor ECU 100 is allowed to promptly stop the switching control for the inverter 20 in a case where an abnormality in the temperature rise control occurs.

The motor ECU 100 determines the presence or absence of an abnormality in the temperature rise control based on the battery current Ibatt. A high-frequency pulsating component contained in the motor current IN is absorbed by the neutral point capacitor 74. Thus, a pulsating component contained in the battery current Ibatt is smaller than the pulsating component contained in the motor current IN. Therefore, the determination method for an abnormality in the temperature rise control based on the battery current Ibatt enables an enhanced accuracy of determination of the presence or absence of an abnormality.

The motor ECU 100 calculates the capacitor current Ic based on the time derivative of the capacitor voltage sensor 85. This makes it possible to determine the capacitor current Ic without the necessity of addition of a current sensor that detects a current flowing through the neutral point capacitor 74.

<Modification Example of First Embodiment>

The power conversion device may include a capacitor current sensor that detects a current flowing through the neutral point capacitor 74. In this case, referring to the block diagram in Fig. 5, the first current calculator 102 is not necessary and it is only necessary to use, in place of the capacitor current Ic, a detection value of the capacitor current sensor in the second current calculator 103.

<Second Embodiment>

Description will be given below of a second embodiment with a focus on differences from the first embodiment with reference to the drawings. In the present embodiment, the motor current IN is used for the determination of an abnormality in the temperature rise control in place of the battery current Ibatt.

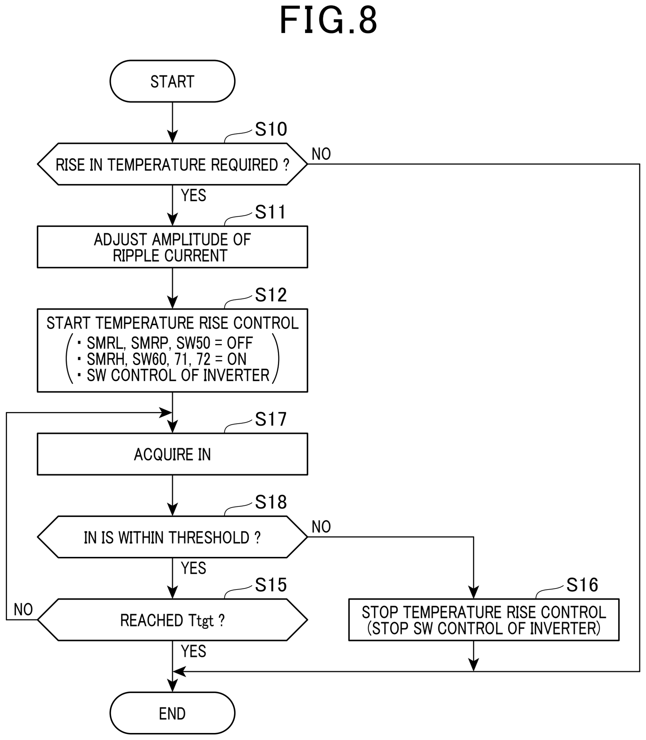

Fig. 8 is a flowchart illustrating a process sequence of the temperature rise control. The process is to be performed by the motor ECU 100.

In Step S17, the motor current IN is acquired.

In Step S18, it is determined whether an abnormality in the temperature rise control occurs based on the acquired motor current IN. Specifically, for example, the motor current IN may be used in place of the battery current Ibatt in the method illustrated in Fig. 6 and Fig. 7.

<Third Embodiment>

Description will be given below of a third embodiment with a focus on differences from the first embodiment with reference to the drawings. In the present embodiment, an abnormality in each of the unit batteries forming the first battery 31 and the second battery 32 is to be determined based on the battery current Ibatt.

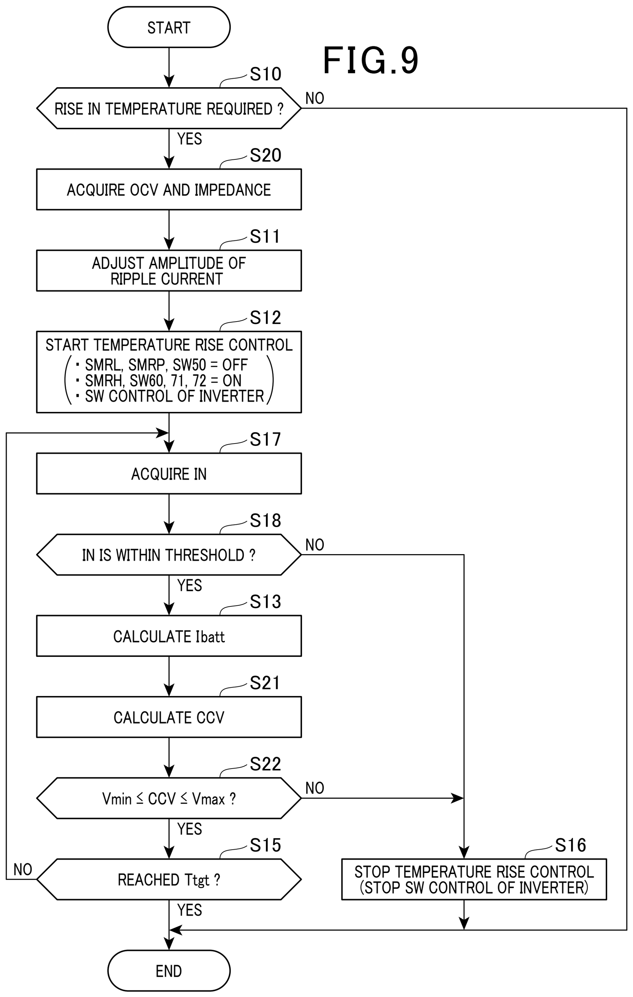

Fig. 9 is a flowchart illustrating a process sequence of the temperature rise control. The process is to be performed by the motor ECU 100.

In response to a rise in temperature being determined to be required in Step S10, the process proceeds to Step S20 and a process to acquire information from the battery ECU 90 is performed. In detail, information regarding an open end voltage (OCV) of each of the unit batteries forming the first battery 31 and the second battery 32 and an impedance (specifically, an internal resistance) of each of the unit batteries is acquired from the battery ECU 90. After the temperature rise control is started, the information acquirement process from the battery ECU 90 is performed only in the first iteration of Step S20, and the temperature rise control is performed primarily by the motor ECU 100 without performing the information acquirement process from the battery ECU 90 in the second and subsequent iterations of Step S20. After the completion of Step S20, the process proceeds to Step S11.

After the temperature rise control is started in Step S12, the processes in Steps S17 and S18 are performed. In response to no abnormality in the temperature rise control being determined to occur in Step S18, the process proceeds to Step S13 and the battery current Ibatt is calculated.

In Step S21, a terminal-to-terminal voltage (CCV) of each of the unit batteries forming the first battery 31 and the second battery 32 is calculated based on the calculated battery current Ibatt and the open end voltage and the impedance acquired in Step S20.

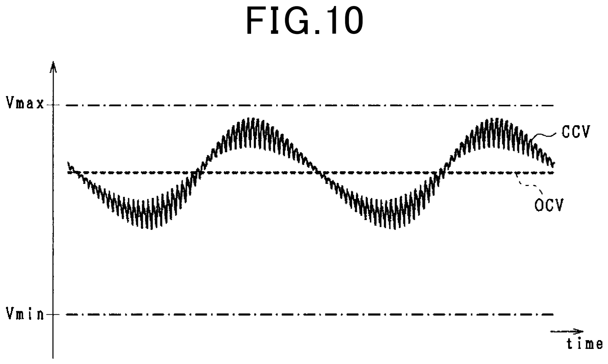

In Step S22, in response to any one of the calculated terminal-to-terminal voltages of the unit batteries being determined to exceed an upper voltage limit Vmax, it is determined that a voltage abnormality occurs in the unit battery with the terminal-to-terminal voltage exceeding the upper voltage limit Vmax (see Fig. 10). Moreover, in response to any one of the calculated terminal-to-terminal voltages of the unit batteries being determined to fall below the lower voltage limit Vmin, it is determined that a voltage abnormality occurs in the unit battery with the terminal-to-terminal voltage falling below the lower voltage limit Vmin.

In response to no voltage abnormality being determined to occur in Step S22, the process proceeds to Step S15. In contrast, in response to a voltage abnormality being determined to occur in Step S22, the process proceeds to Step S16 and the temperature rise control is stopped.

The present embodiment described hereinabove makes it possible to determine the presence or absence of a voltage abnormality in each of the batteries 31, 32 based on the battery current Ibatt used for the determination of an abnormality in the temperature rise control.

<Modification Example of Third Embodiment>

In Step S18, the battery current Ibatt may be used as in the first embodiment in place of the motor current IN.

<Fourth Embodiment>

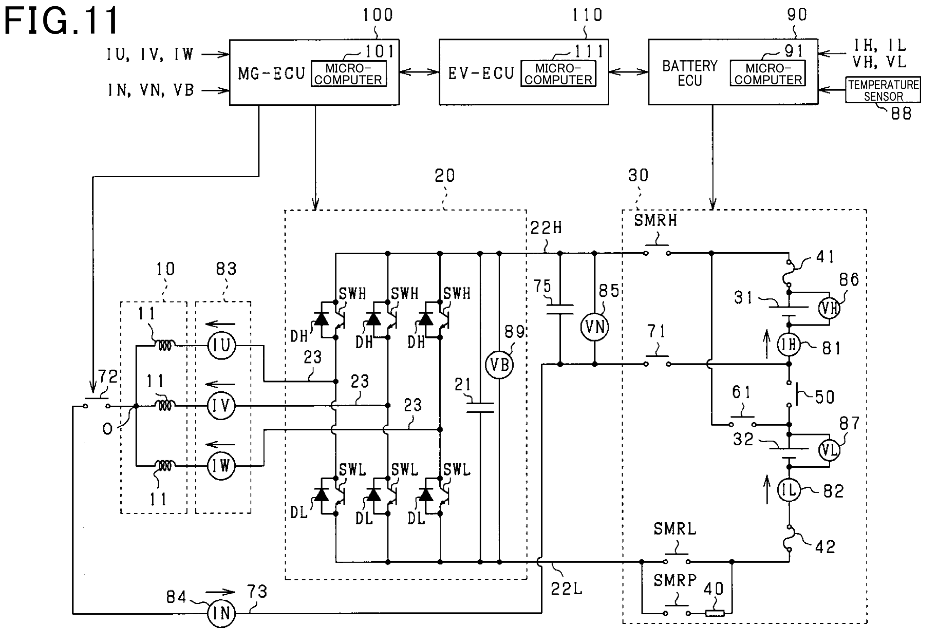

Description will be made below on a fourth embodiment with a focus on differences from the third embodiment with reference to the drawings. In the present embodiment, the connection path 73 electrically connects the neutral point O of the armature windings 11 and the negative terminal of the first battery 31 as illustrated in Fig. 11. Moreover, a bypass switch 61 connects the positive terminal of the second battery 32 and the high-potential-side path 22H. A first end of the neutral point capacitor 75 is connected to, within the connection path 73, a portion between the first-motor-side switch 71 and the second-motor-side switch 72. A second end of the neutral point capacitor 75 is connected to the high-potential-side path 22H.

Subsequently, description will be given of a temperature rise control of the present embodiment.

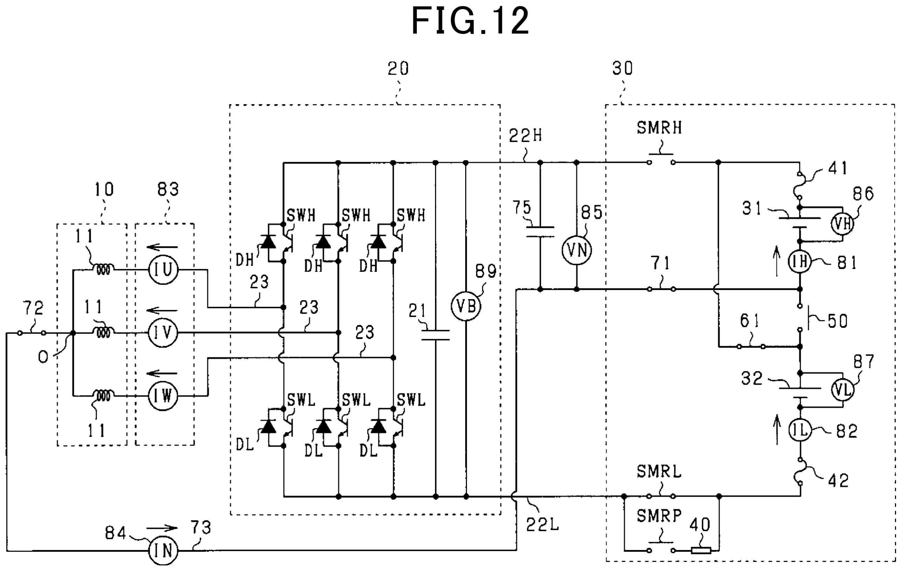

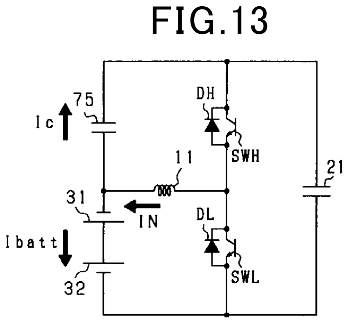

Fig. 12 illustrates a control state of each switch during the temperature rise control. For the temperature rise control, the motor ECU 100 turns on the low-potential-side main switch SMRL, the bypass switch 61, and each of the motor-side switches 71, 72 and turns off the high-potential-side main switch SMRH, the precharge main switch SMRP, and the battery-to-battery switch 50. Fig. 13 is an equivalent circuit in the power conversion device during the temperature rise control.

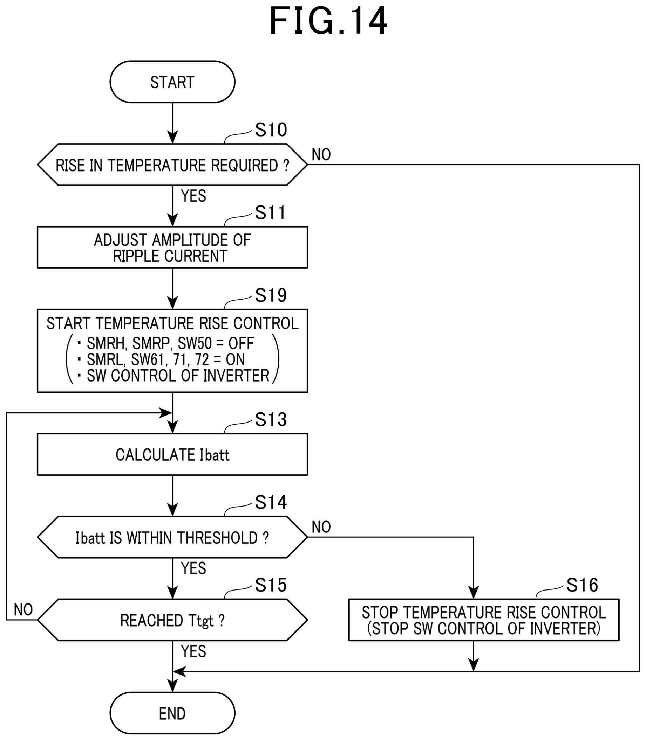

Fig. 14 is a flowchart illustrating a process sequence of the temperature rise control. The process is to be performed by the motor ECU 100.

In Step S19, the temperature rise control is started. In detail, the high-potential-side main switch SMRH, the precharge main switch SMRP, and the battery-to-battery switch 50 are turned off and the low-potential-side main switch SMRL, the bypass switch 61, the first-motor-side switch 71, and the second-motor-side switch 72 are turned on.

In Step S19, the upper and lower arm switches SWH, SWL of the inverter 20 may be alternately switched on, or the lower arm switch SWL may be switched while the upper arm switch SWH is kept in the OFF position. In this case, the switching may be performed for all of the three phases, only two of the three phases, or only one of the three phases. In a case where the switching is performed for two or more of the phases, for example, not only the timings of switching the lower arm switches SWL on but also the timings of switching them off may be synchronized between the phases.

Specifically, an abnormality in the temperature rise control of the present embodiment may occur due to, for example, the following factors (D) to (E).

(D) An abnormality in a path where the current flows during the temperature rise control

The path where the current flows includes the first fuse 41, the bypass switch 61, the second fuse 42, the low-potential-side main switch SMRL, the low-potential-side path 22L, the inverter 20, the electrically conductive member 23, the armature windings 11, the second-motor-side switch 72, the connection path 73, and the first-motor-side switch 71. For example, an abnormality in, within the path where the current flows, the inverter 20 includes unintentionally turning on the lower arm switch SWL. The unintentional turning on may occur due to, for example, a short circuit fault of the lower arm switch SWL.

(E) An abnormality in the motor ECU 100

For example, the lower arm switch SWL may be kept in the ON position due to an abnormality in the motor ECU 100 even though the switching control for the lower arm switch SWL is desired. In other words, the lower arm switch SWL may be unintentionally turned on.

(F) An abnormality in a signal path from the motor ECU 100 to a gate of the lower arm switch SWL

The abnormality in the signal path includes, for example, an abnormality in a drive IC of the lower arm switch SWL. In this case, the lower arm switch SWL may be unintentionally turned on.

The present embodiment described hereinabove is able to produce effects similar to those of the first embodiment.

<Other Embodiments>

It should be noted that the above-described embodiments may be modified as follows in implementation.

- In the fourth embodiment, the processes in Steps S17 and S18 in Fig. 9 may be performed as in the second embodiment in place of the processes in Steps S13 and 14 in Fig. 14.

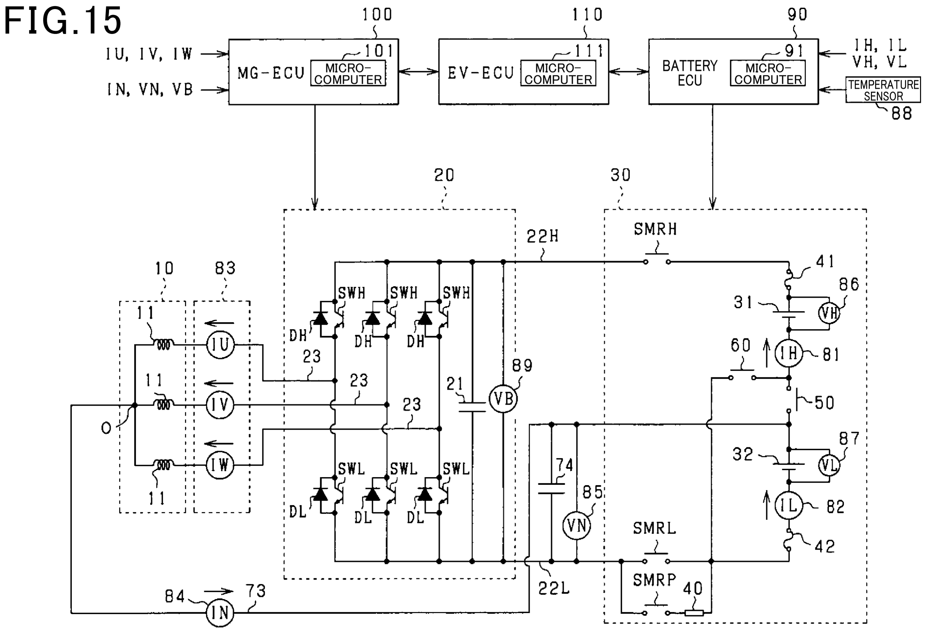

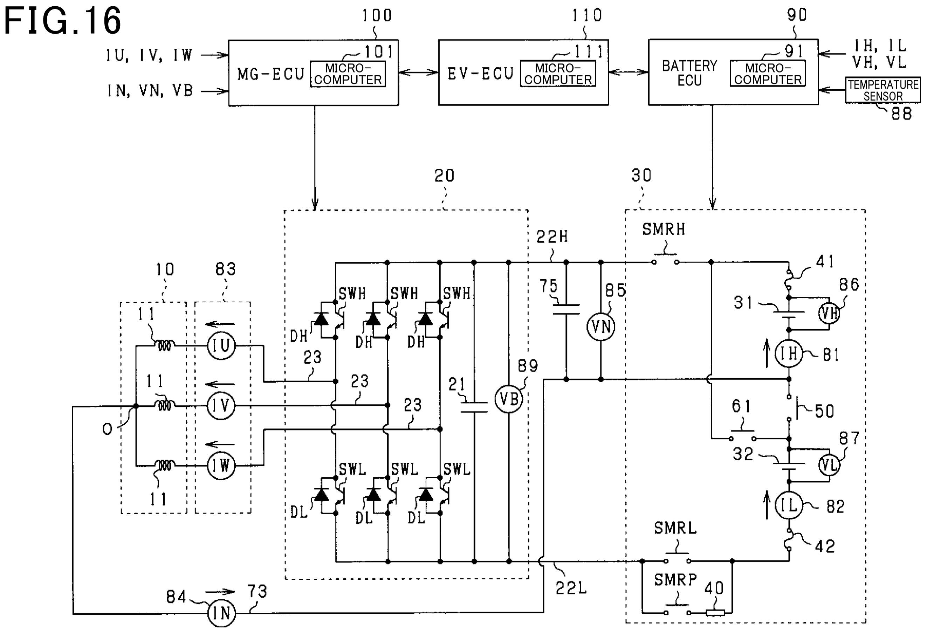

- Either one of the first- or second-motor-side switches 71, 72 may not be provided in the power conversion device. Moreover, neither one of the first- and second-motor-side switches 71, 72 may be provided in the power conversion device. The power conversion device illustrated in Fig. 15 is the power conversion device in Fig. 1 with the first- and second-motor-side switches 71, 72 removed therefrom. Moreover, the power conversion device illustrated in Fig. 16 is the power conversion device illustrated in Fig. 11 with the first- and second-motor-side switches 71, 72 excluded therefrom.

- The EV ECU 110 may not be provided in the system. In this case, the motor ECU 100 and the battery ECU 90 only have to directly send and receive information.

- The target current Itgt is not limited to a sine wave current and may be, for example, a rectangular wave current.

- The switch of the inverter 20 is not limited to an IGBT and may be, for example, an N-channel MOSFET including a body diode. In this case, a high-potential-side terminal of the N-channel MOSFET serves as a drain and a low-potential-side terminal thereof serves as a source.

- The motor is not limited to a star-connected motor and may be a delta-connected motor. Moreover, the motor and the inverter are not limited to three-phase motor and inverter, and may be two-phase motor and inverter or four- or more phase motor and inverter. Moreover, the motor is not limited to a permanent magnet synchronous machine in which a rotor includes a permanent magnet as a field pole, and may be a winding field synchronous machine in which the rotor includes a field winding as a field pole. In this case, both of the field winding and the permanent magnet may be provided in the rotor. Moreover, the motor is not limited to a synchronous machine and may be an induction machine.

- The power storage that is a target to be charged by the external charger is not limited to a battery and may be, for example, a high-capacity electrical double layer capacitor or a unit including both a battery and an electrical double layer capacitor.

- The moving body where the power conversion device is installed is not limited to a vehicle and may be, for example, an aircraft or a vessel. Moreover, an installation location of the power conversion device is not limited to a moving body and may be a stationary device.

- The controller and its method described in the present disclosure may be implemented by a dedicated computer provided by a processor programmed to execute one or a plurality of functions embodied by a computer program and memory. Alternatively, the controller and its method described in the present disclosure may be implemented by a dedicated computer provided by a processor including one or more dedicated hardware logic circuits. Furthermore, the controller and its method described in the present disclosure may be implemented by one or more dedicated computers including a combination of a memory and processor programmed to execute one or a plurality of functions and one or more hardware logic circuits. Additionally, the computer program may be stored in a computer-readable non-transitory tangible storage medium as instructions to be executed by a computer.

- In the following, distinguishing configurations extracted from the above-described embodiments will be described.

[Configuration 1]

A power conversion device including:

an inverter (20) including an upper arm switch (SWH) and a lower arm switch (SWL);
a motor (10) including an armature winding (11) electrically connected to a low-potential-side terminal of the upper arm switch and a high-potential-side terminal of the lower arm switch;
a high-potential-side path (22H) that electrically connects a positive terminal of a first power storage (31) and a high-potential-side terminal of the upper arm switch;
a low-potential-side path (22L) that electrically connects a negative terminal of a second power storage (32) and a low-potential-side terminal of the lower arm switch;
a power-storage-to-power-storage switch (50) that electrically connects a negative terminal of the first power storage and a positive terminal of the second power storage when turned on and electrically disconnects the negative terminal of the first power storage and the positive terminal of the second power storage when turned off;
a bypass switch (60, 61) that establishes either one of an electrical connection between the negative terminals of the first power storage and the second power storage and an electrical connection between the positive terminals of the first power storage and the second power storage;
a connection path (73) that electrically connects the negative terminal of the first power storage or the positive terminal of the second power storage and the armature winding;
a neutral point capacitor (74, 75) connected to the connection path;
a current sensor (84, 83) that detects a current flowing through the connection path or a current flowing through the armature winding; and
a controller (100) to which a detection value of the current sensor is to be inputted, the controller being configured to:

perform a temperature rise control in which in order to cause a ripple current to flow through the first power storage and the second power storage, at least one of the upper and lower arm switches is switched in a state where the bypass switch is turned on and the power-storage-to-power-storage switch is turned off; and determine whether an abnormality in the temperature rise control occurs based on the detection value of the current sensor while the temperature rise control is performed.

[Configuration 2]

The power conversion device according to Configuration 1, in which

the bypass switch (60) is a switch that electrically connects the negative terminal of the first power storage and the negative terminal of the second power storage,
the connection path is an electrical path that electrically connects the armature winding and the positive terminal of the second power storage, and
the neutral point capacitor (74) electrically connects the connection path and the low-potential-side path.

[Configuration 3]

The power conversion device according to Configuration 1, in which

the bypass switch (61) is a switch that electrically connects the positive terminal of the first power storage and the positive terminal of the second power storage,
the connection path is an electrical path that electrically connects the armature winding and the negative terminal of the first power storage, and
the neutral point capacitor (75) electrically connects the connection path and the high-potential-side path.

[Configuration 4]

The power conversion device according to Configuration 2 or 3, in which the controller is configured to determine whether the abnormality occurs based on the detection value of the current sensor and a capacitor current, the capacitor current being a current flowing through the neutral point capacitor.

[Configuration 5]

The power conversion device according to Configuration 4, further including a voltage sensor (85) detecting a terminal-to-terminal voltage of the neutral point capacitor, in which

a detection value of the voltage sensor is inputted to the controller, and
the controller is configured to calculate, based on the detection value of the current sensor and a time derivative of the detection value of the voltage sensor, the capacitor current used to determine the abnormality.

[Configuration 6]

The power conversion device according to Configuration 5, in which

each of the first power storage and the second power storage is an assembled battery, the assembled battery including a series connection body of unit batteries, and
the controller is configured to:

calculate a current flowing through the first power storage and the second power storage based on the calculated capacitor current;
calculate, based on impedance information regarding the unit batteries and the calculated current flowing through the first power storage and the second power storage, respective terminal-to-terminal voltages of the unit batteries forming the first power storage and the second power storage; and
determine, in response to determining that any one of the calculated respective terminal-to-terminal voltages of the unit batteries exceeds an upper voltage limit (Vmax) or falls below a lower voltage limit (Vmin), that an abnormality occurs in the unit battery with the terminal-to-terminal voltage exceeding the upper voltage limit or falling below the lower voltage limit.

[Configuration 7]

The power conversion device according to any one of Configurations 1 to 5, in which the controller is configured to:

calculate an alternating target current flowing through the first power storage and the second power storage;
perform, as the temperature rise control, a control in which at least one of the upper and lower arm switches is switched so that a current flowing through the first power storage and the second power storage is controlled to reach the target current; and
determine, in response to determining that a magnitude of the current flowing through the first power storage and the second power storage exceeds a threshold (Ith) larger than a maximum value of a magnitude of the target current, that the abnormality occurs.

[Configuration 8]

The power conversion device according to any one of Configurations 1 to 5, in which the controller is configured to:

calculate an alternating target current flowing through the first power storage and the second power storage;

perform, as the temperature rise control, a control in which at least one of the upper and lower arm switches is switched so that a current flowing through the first power storage and the second power storage is controlled to reach the target current;

set an upper threshold (IthH) that is larger than the target current and changes along the target current and a lower threshold (IthL) that is smaller than the target current and changes along the target current; and

determine, in response to determining that the current flowing through the first power storage and the second power storage exceeds the upper threshold or the current flowing through the first power storage and the second power storage falls below the lower threshold, that the abnormality occurs.

[Configuration 9]

The power conversion device according to any one of Configurations 1 to 8, in which in response to determining that the abnormality occurs, the controller is configured to stop switching the inverter to stop the temperature rise control.

Although the present disclosure has been described in reference to the embodiments, it should be understood that the present disclosure is not limited to the embodiments and structures. The present disclosure also encompasses various modification examples and modifications within the equivalent range. In addition, various combinations and forms, as well as other combinations and forms including only one element, more or less, are within the scope and spirit of the present disclosure.

**Claims**

1. A power conversion device comprising:

an inverter (20) including an upper arm switch (SWH) and a lower arm switch (SWL);
a motor (10) including an armature winding (11) electrically connected to a low-potential-side terminal of the upper arm switch and a high-potential-side terminal of the lower arm switch;
a high-potential-side path (22H) that electrically connects a positive terminal of a first power storage (31) and a high-potential-side terminal of the upper arm switch;
a low-potential-side path (22L) that electrically connects a negative terminal of a second power storage (32) and a low-potential-side terminal of the lower arm switch;
a power-storage-to-power-storage switch (50) that electrically connects a negative terminal of the first power storage and a positive terminal of the second power storage when turned on and electrically disconnects the negative terminal of the first power storage and the positive terminal of the second power storage when turned off;
a bypass switch (60, 61) that establishes either one of an electrical connection between the negative terminals of the first power storage and the second power storage and an electrical connection between the positive terminals of the first power storage and the second power storage;
a connection path (73) that electrically connects the negative terminal of the first power storage or the positive terminal of the second power storage and the armature winding;
a neutral point capacitor (74, 75) connected to the connection path;
a current sensor (84, 83) that detects a current flowing through the connection path or a current flowing through the armature winding; and
a controller (100) to which a detection value of the current sensor is to be inputted, the controller being configured to:

perform a temperature rise control in which in order to cause a ripple current to flow through the first power storage and the second power storage, at least one of the upper and lower arm switches is switched in a state where the bypass switch is turned on and the power-storage-to-power-storage switch is turned off; and
determine whether an abnormality in the temperature rise control occurs based on the detection value of the current sensor while the temperature rise control is performed.

2. The power conversion device according to claim 1, wherein

the bypass switch (60) is a switch that electrically connects the negative terminal of the first power storage and the negative terminal of the second power storage,
the connection path is an electrical path that electrically connects the armature winding and the positive terminal of the second power storage, and
the neutral point capacitor (74) electrically connects the connection path and the low-potential-side path.

3. The power conversion device according to claim 1, wherein

the bypass switch (61) is a switch that electrically connects the positive terminal of the first power storage and the positive terminal of the second power storage,

the connection path is an electrical path that electrically connects the armature winding and the negative terminal of the first power storage, and

the neutral point capacitor (75) electrically connects the connection path and the high-potential-side path.

4. The power conversion device according to claim 2 or 3, wherein the controller is configured to determine whether the abnormality occurs based on the detection value of the current sensor and a capacitor current, the capacitor current being a current flowing through the neutral point capacitor.

5. The power conversion device according to claim 4, further comprising a voltage sensor (85) detecting a terminal-to-terminal voltage of the neutral point capacitor, wherein

a detection value of the voltage sensor is inputted to the controller, and

the controller is configured to calculate, based on the detection value of the current sensor and a time derivative of the detection value of the voltage sensor, the capacitor current used to determine the abnormality.

6. The power conversion device according to claim 5, wherein

each of the first power storage and the second power storage is an assembled battery, the assembled battery including a series connection body of unit batteries, and

the controller is configured to:

calculate a current flowing through the first power storage and the second power storage based on the calculated capacitor current;

calculate, based on impedance information regarding the unit batteries and the calculated current flowing through the first power storage and the second power storage, respective terminal-to-terminal voltages of the unit batteries forming the first power storage and the second power storage; and

determine, in response to determining that any one of the calculated respective terminal-to-terminal voltages of the unit batteries exceeds an upper voltage limit (Vmax) or falls below a lower voltage limit (Vmin), that an abnormality occurs in the unit battery with the terminal-to-terminal voltage exceeding the upper voltage limit or falling below the lower voltage limit.

7. The power conversion device according to any one of claims 1 to 3, wherein the controller is configured to:

calculate an alternating target current flowing through the first power storage and the second power storage;

perform, as the temperature rise control, a control in which at least one of the upper and lower arm switches is switched so that a current flowing through the first power storage and the second power storage is controlled to reach the target current; and

determine, in response to determining that a magnitude of the current flowing through the first power storage and the second power storage exceeds a threshold (Ith) larger than a maximum value of a magnitude of the target current, that the abnormality occurs.

8. The power conversion device according to any one of claims 1 to 3, wherein the controller is configured to:

calculate an alternating target current flowing through the first power storage and the second power storage;

perform, as the temperature rise control, a control in which at least one of the upper and lower arm switches is switched so that a current flowing through the first power storage and the second power storage is controlled to reach the target current;

set an upper threshold (IthH) that is larger than the target current and changes along the target current and a lower threshold (IthL) that is smaller than the target current and changes along the target current; and

determine, in response to determining that the current flowing through the first power storage and the second power storage exceeds the upper threshold or the current flowing through the first power storage and the second power storage falls below the lower threshold, that the abnormality occurs.

9. The power conversion device according to any one of claims 1 to 3, wherein in response to determining that the abnormality occurs, the controller is configured to stop switching the inverter to stop the temperature rise control.

10. A program applicable to a power conversion device, the power conversion device including:

an inverter (20) including an upper arm switch (SWH) and a lower arm switch (SWL); a motor (10) including an armature winding (11) electrically connected to a low-potential-side terminal of the upper arm switch and a high-potential-side terminal of the lower arm switch; a high-potential-side path (22H) that electrically connects a positive terminal of a first power storage (31) and a high-potential-side terminal of the upper arm switch; a low-potential-side path (22L) that electrically connects a negative terminal of a second power storage (32) and a low-potential-side terminal of the lower arm switch; a power-storage-to-power-storage switch (50) that electrically connects a negative terminal of the first power storage and a positive terminal of the second power storage when turned on and electrically disconnects the negative terminal of the first power storage and the positive terminal of the second power storage when turned off; a bypass switch (60, 61) that establishes either one of an electrical connection between the negative terminals of the first power storage and the second power storage and an electrical connection between the positive terminals of the first power storage and the second power storage; a connection path (73) that electrically connects the negative terminal of the first power storage or the positive terminal of the second power storage and the armature winding; a neutral point capacitor (74) connected to the connection path; a current sensor (84, 83) that detects a current flowing through the connection path or a current flowing through the armature winding; and a computer (101) to which a detection value of the current sensor is to be inputted, the program causing the computer to perform:

a process to perform a temperature rise control in which in order to cause a ripple current to flow through the first power storage and the second power storage, at least one of the upper and lower arm switches is switched in a state where the bypass switch is turned on and the power-storage-to-power-storage switch is turned off; and a process to determine whether an abnormality in the temperature rise control occurs based on the detection value of the current sensor while the temperature rise control is performed.

# FIG.1

EP 4 727 005 A1

FIG.2

# FIG.3

# FIG.4

```
         START
           │
           ▼                    S10
  ┌─────────────────────────────┐   NO
  ⟨ RISE IN TEMPERATURE REQUIRED ? ⟩──────────────────┐
  └─────────────────────────────┘                     │
           │ YES                                       │
           ▼                    S11                    │
  ┌─────────────────────────┐                          │
  │  ADJUST AMPLITUDE OF     │                          │
  │  RIPPLE CURRENT          │                          │
  └─────────────────────────┘                          │
           │                    S12                     │
           ▼                                            │
  ┌─────────────────────────────────┐                  │
  │ START TEMPERATURE RISE CONTROL   │                  │
  │ ( · SMRL, SMRP, SW50 = OFF       │                  │
  │   · SMRH, SW60, 71, 72 = ON      │                  │
  │   · SW CONTROL OF INVERTER )     │                  │
  └─────────────────────────────────┘                  │
           │                                            │
           ▼                    S13                     │
  ┌─────────────────────────┐                          │
  │  CALCULATE Ibatt         │◄─────┐                   │
  └─────────────────────────┘      │                   │
           │                    S14 │                   │
           ▼                        │                   │
  ┌─────────────────────────┐  NO   │                   │
  ⟨ Ibatt IS WITHIN THRESHOLD ? ⟩───┼──────────┐        │
  └─────────────────────────┘       │          │        │
           │ YES                    │          │        │
           ▼                    S15 │          ▼   S16   │
  ┌─────────────────────┐  NO       │  ┌───────────────────────────────┐
  ⟨  REACHED Ttgt ?     ⟩───────────┘  │ STOP TEMPERATURE RISE CONTROL │
  └─────────────────────┘              │ (STOP SW CONTROL OF INVERTER) │
           │ YES                       └───────────────────────────────┘
           ▼                                  │                  │
         ┌──────┐◄───────────────────────────┘                  │
         │ END  │◄──────────────────────────────────────────────┘
         └──────┘
```

# FIG.5

$$I_c = C \frac{dVN}{dt}$$

CURRENT CALCULATOR (102)

VN → [CURRENT CALCULATOR] → Ic → (103) → Ibatt

IN

# FIG.6

# FIG.7

# FIG.8

```
                    ┌──────────┐
                    │  START   │
                    └─────┬────┘
                          │          S10
                          ▼
          ◁─────────────────────────────▷ ──NO──────────────┐
            RISE IN TEMPERATURE REQUIRED ?                    │
          ◁─────────────────────────────▷                    │
                          │ YES                               │
                          │          S11                      │
                          ▼                                   │
              ┌──────────────────────┐                        │
              │   ADJUST AMPLITUDE OF │                        │
              │    RIPPLE CURRENT     │                        │
              └───────────┬──────────┘                        │
                          │          S12                      │
                          ▼                                   │
        ┌────────────────────────────────────┐               │
        │   START TEMPERATURE RISE CONTROL    │               │
        │  ⎛ · SMRL, SMRP, SW50 = OFF      ⎞  │               │
        │  ⎜ · SMRH, SW60, 71, 72 = ON     ⎟  │               │
        │  ⎝ · SW CONTROL OF INVERTER      ⎠  │               │
        └───────────────────┬────────────────┘               │
                            │                                 │
              ┌─────────────┤          S17                    │
              │             ▼                                 │
              │   ┌──────────────────────┐                    │
              │   │      ACQUIRE IN       │                    │
              │   └───────────┬──────────┘                    │
              │               │          S18                  │
              │               ▼                               │
              │   ◁─────────────────────▷ ──NO──┐             │
              │     IN IS WITHIN THRESHOLD ?     │             │
              │   ◁─────────────────────▷        │             │
              │               │ YES              │             │
              │               │        S15       │      S16    │
              │               ▼                  ▼             │
          ┌───◁──────────────────▷      ┌─────────────────────────┐
          NO    REACHED Ttgt ?          │ STOP TEMPERATURE RISE   │
              ◁──────────────────▷      │ CONTROL                 │
                          │ YES         │(STOP SW CONTROL OF      │
                          │             │       INVERTER)         │
                          │             └────────────┬────────────┘
                          ▼◄──────────────────────────┘          │
                    ┌──────────┐                                 │
                    │   END    │◄────────────────────────────────┘
                    └──────────┘
```

# FIG.9

START

**S10** RISE IN TEMPERATURE REQUIRED ? — NO →

YES

**S20** ACQUIRE OCV AND IMPEDANCE

**S11** ADJUST AMPLITUDE OF RIPPLE CURRENT

**S12** START TEMPERATURE RISE CONTROL
( · SMRL, SMRP, SW50 = OFF
· SMRH, SW60, 71, 72 = ON
· SW CONTROL OF INVERTER )

**S17** ACQUIRE IN

**S18** IN IS WITHIN THRESHOLD ? — NO →

YES

**S13** CALCULATE Ibatt

**S21** CALCULATE CCV

**S22** Vmin ≤ CCV ≤ Vmax ? — NO →

YES

**S15** REACHED Ttgt ? — NO ↑

**S16** STOP TEMPERATURE RISE CONTROL (STOP SW CONTROL OF INVERTER)

YES

END

# FIG.10

FIG.11

EP 4 727 005 A1

# FIG.12

EP 4 727 005 A1

# FIG.13

# FIG.14

```
                    ┌──────────┐
                    │  START   │
                    └────┬─────┘
                         │           ╭── S10
                         ▼
          ╱─────────────────────────────────╲   NO
         ⟨   RISE IN TEMPERATURE REQUIRED ?   ⟩────────────────────┐
          ╲─────────────────────────────────╱                     │
                         │ YES                                     │
                         ▼           ╭── S11                       │
          ┌───────────────────────────────┐                       │
          │      ADJUST AMPLITUDE OF       │                       │
          │        RIPPLE CURRENT          │                       │
          └───────────────┬───────────────┘                       │
                          │          ╭── S19                       │
                          ▼                                        │
      ┌─────────────────────────────────────────┐                 │
      │   START TEMPERATURE RISE CONTROL         │                 │
      │  ⎛ · SMRH, SMRP, SW50 = OFF    ⎞          │                 │
      │  ⎜ · SMRL, SW61, 71, 72 = ON   ⎟          │                 │
      │  ⎝ · SW CONTROL OF INVERTER    ⎠          │                 │
      └─────────────────┬───────────────────────┘                 │
                        │            ╭── S13                       │
        ┌──────────────►▼                                          │
        │     ┌───────────────────────┐                           │
        │     │     CALCULATE Ibatt    │                          │
        │     └───────────┬───────────┘                           │
        │                 │         ╭── S14                        │
        │                 ▼                                        │
        │    ╱─────────────────────────────╲  NO                  │
        │   ⟨   Ibatt IS WITHIN THRESHOLD ?  ⟩──────┐              │
        │    ╲─────────────────────────────╱        │             │
        │                 │ YES                     │             │
        │                 ▼        ╭── S15          ▼   ╭── S16    │
        │  NO ╱───────────────────╲    ┌───────────────────────────────┐
        └────⟨    REACHED Ttgt ?    ⟩    │  STOP TEMPERATURE RISE CONTROL │
             ╲───────────────────╱    │  (STOP SW CONTROL OF INVERTER) │
                       │ YES          └───────────────┬───────────────┘
                       ▼                              │              │
                 ┌──────────┐◄──────────────────────────────────────┘
                 │   END    │
                 └──────────┘
```

26

FIG.15

FIG.16

## INTERNATIONAL SEARCH REPORT

| International application No. |
|---|
| **PCT/JP2024/017410** |

### A. CLASSIFICATION OF SUBJECT MATTER

*H02P 27/06*(2006.01)i; *B60L 3/00*(2019.01)i; *B60L 50/60*(2019.01)i; *B60L 58/18*(2019.01)i; *B60L 58/25*(2019.01)i; *H02J 7/00*(2006.01)i; *H02M 7/48*(2007.01)i

FI: H02P27/06; B60L3/00 J; B60L50/60; B60L58/18; B60L58/25; H02J7/00 P; H02J7/00 Y; H02M7/48 M

According to International Patent Classification (IPC) or to both national classification and IPC

### B. FIELDS SEARCHED

Minimum documentation searched (classification system followed by classification symbols)

H02P27/06; B60L3/00; B60L50/60; B60L58/18; B60L58/25; H02J7/00; H02M7/48

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2023-23568 A (DENSO CORPORATION) 16 February 2023 (2023-02-16) entire text, all drawings | 1-10 |
| A | JP 2022-187416 A (DENSO CORPORATION) 19 December 2022 (2022-12-19) entire text, all drawings | 1-10 |
| A | JP 2013-187919 A (DENSO CORPORATION) 19 September 2013 (2013-09-19) entire text, all drawings | 1-10 |
| A | CN 216033900 U (BYD COMPANY LIMITED) 15 March 2022 (2022-03-15) entire text, all drawings | 1-10 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 July 2024** | **30 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/017410**

| Patent document cited in search report | | | Publication date (day/month/year) | Patent family member(s) | | | Publication date (day/month/year) |
|---|---|---|---|---|---|---|---|
| JP | 2023-23568 | A | 16 February 2023 | CN | 117813740 | A | |
| JP | 2022-187416 | A | 19 December 2022 | US | 2024/0106367 | A1 | |
| | | | | entire text, all drawings | | | |
| | | | | EP | 4354723 | A1 | |
| JP | 2013-187919 | A | 19 September 2013 | (Family: none) | | | |
| CN | 216033900 | U | 15 March 2022 | (Family: none) | | | |

Form PCT/ISA/210 (patent family annex) (July 2022)

**EP 4 727 005 A1**

**Patent documents cited in the description**

- JP 2023094073 A

- JP 2011018532 A